# EUROPEAN PATENT APPLICATION

(11) **EP 1 742 247 A2**
(43) Date of publication of application: **10.01.2007**
(21) Application number: 06291111.0
(22) Date of filing: 05.07.2006
(51) Int. Cl.: H01J 17/49

(54) **Plasma display panel**

(30) Priority: 05.07.2005 KR 20051060266
(71) Applicant: LG Electronics Inc., Youngdungpo-Gu Seoul (KR)
(72) Inventor: Lee, Yoon Kwan, Gwangmyeong-si Gyeonggi-do (KR)
(74) Representative: Vignesoult, Serge L. M.

(57) **Abstract**

Disclosed herein is a plasma display panel. The plasma display panel comprises partition walls between first and second substrates to separate discharge cells from each other. Each of the partition walls comprises a non-Pb based glass powder matrix, and a non-Pb based filler having a ratio of 5 ~ 45 wt% with respect to the glass powder matrix.

## Description

This application claims the benefit of Korean Patent Application No. P2005-0060266, filed on July 05, 2005, which is hereby incorporated by reference as if fully set forth herein.

### BACKGROUND OF THE INVENTION

### Field of the Invention

The present invention relates to a flat panel display device, and, more particularly, to a plasma display panel and a method for manufacturing the same.

### Discussion of the Related Art

Generally, a plasma display panel is a display device which employs visible light generated from phosphors through excitation of the phosphors by ultraviolet rays generated via gas discharge.

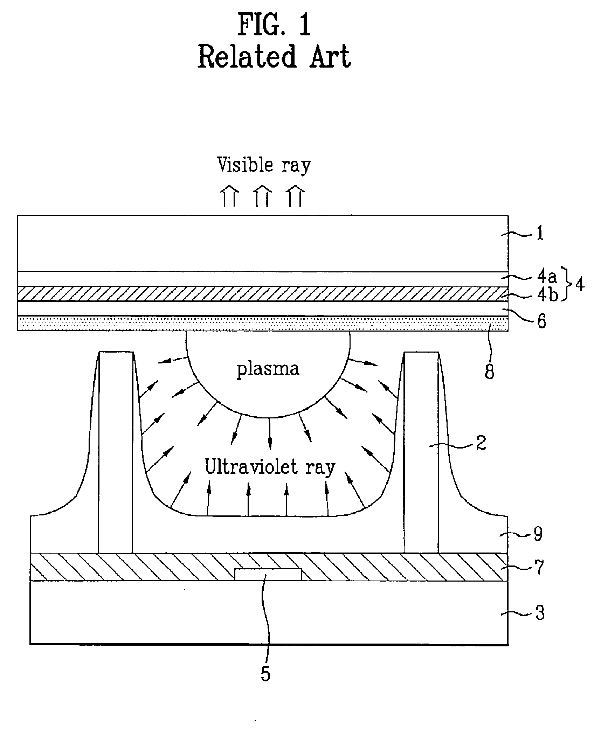

The plasma display panel comprises discharge cells arranged in a matrix shape, each of which comprises an upper substrate 1 functioning as a display surface of images, and a lower substrate 3 disposed parallelly to the upper substrate 1 via partition walls 2, as shown in FIG. 1.

In each of the discharge cells, the upper substrate 1 has a sustain electrode 4 consisting of a transparent electrode 4a and a bus electrode 4b, an upper dielectric layer 6, and a protective layer 8 sequentially stacked thereon, and the lower substrate 3 has an address electrode 5 to generate discharge in cooperation with the sustain electrode 4, and a lower dielectric layer 7 sequentially stacked thereon.

On the lower dielectric layer 7, phosphors 9 are coated over the partition walls 2 to generate visible light of their respective colors.

These phosphors 9 are excited by vacuum ultraviolet rays of a short wavelength generated upon gas discharge, and generate visible light of red, green and blue colors.

The partition wall 2 is generally formed by mixing a PbO-based matrix glass and oxide fillers.

At this time, for photosensitive partition walls formed without use of a photo-resistor, it is necessary to allow the ultraviolet rays having a short wavelength to be completely transmitted through the partition walls having a thickness of about 200 µm.

However, if the photosensitive partition walls contain heavy metal components such as PbO and the like, the heavy metal components therein increase a refractive index, and cause light scattering, so that transmittance of ultraviolet rays through the partition wall is lowered, thereby deteriorating development and adherence properties.

Furthermore, in the conventional display panel, although the partition walls comprises the oxide filler in order to enhance impact strength and reflectance of the partition walls, such oxide filler is not desirable due to its high scattering property with respect to the ultraviolet rays.

### SUMMARY OF THE INVENTION

Accordingly, the present invention is directed to a plasma display panel and a method for manufacturing the same that substantially obviate one or more problems due to limitations and disadvantages of the related art.

An object of the present invention is to provide a plasma display panel, which comprises partition walls formed of new materials and having excellent properties.

It is another object of the present invention to provide the plasma display panel, which comprises the partition walls formed of new materials to have environmental friendliness, and to provide a method for manufacturing the same.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, there is provided a plasma display panel comprising partition walls between first and second substrates to separate discharge cells from each other, wherein each of the partition walls comprises a non-Pb based glass powder matrix, and a non-Pb based filler having a ratio of 5 - 45 wt% with respect to the glass powder matrix.

Preferably, at least one of the non-Pb based glass powder matrix and the filler comprises an oxide of at least one material selected from the group consisting of silicon (Si), magnesium (Mg), aluminum (Al), calcium (Ca), zinc (Zn), barium (Ba), strontium (Sr), boron (B), phosphorus (P), zirconium (Zr), sodium (Na), lithium (Li), lanthanum (La), potassium (K), manganese (Mn), molybdenum (Mo), iron (Fe), titan (Ti), europium (Eu), antimony (Sb), bismuth (Bi), praseodymium (Pr), and cerium (Ce), or is one material among a SiO₂-Al₂O₃-MgO based material, a SiO₂-B₂O₃-Na₂O based material, a P₂O₅-ZnO-Bi₂O₃ based material and a B₂O₃-ZnO-La₂O₃ based material.

In accordance with another aspect of the present invention, there is provided a plasma display panel comprising partition walls between first and second substrates to separate discharge cells from each other, wherein each of the partition walls comprises a non-Pb based glass powder matrix, and a non-Pb based filler having a particle size of an ultraviolet wavelength or less.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

FIG. 1 is a diagram of a conventional plasma display panel;

FIG. 2 is a diagram of a plasma display panel according to the present invention; and

FIGs. 3A to 3F are flow diagrams illustrating steps of a method for manufacturing a plasma display panel according to the present invention.

### DETAILED DESCRIPTION OF THE INVENTION

Reference will now be made in detail to the preferred embodiments of the present invention, examples of which are illustrated in the accompanying drawings. Wherever possible, the same reference numbers will be used throughout the drawings to refer to the same or like parts.

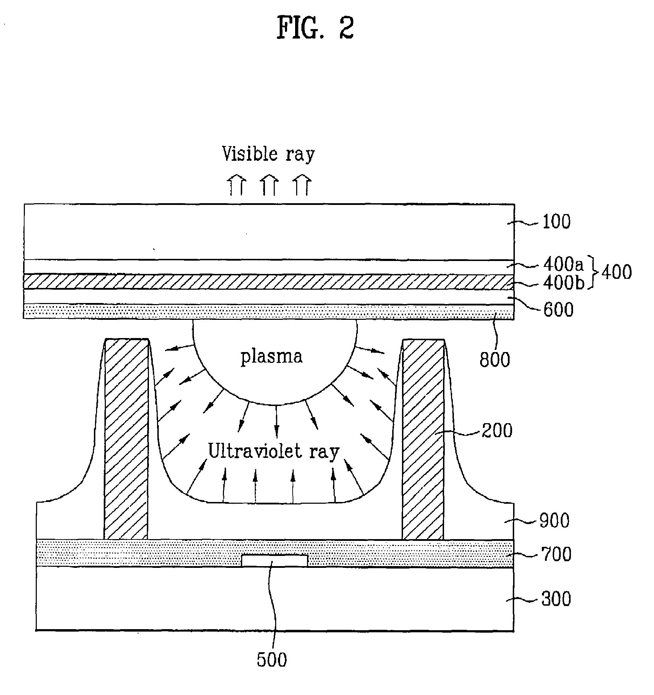

FIG. 2 is a diagram of a plasma display panel according to the present invention. Referring to FIG. 2, the plasma display panel of the present invention comprises an upper substrate 100 and a lower substrate 300 disposed to face each other.

The upper substrate 100 has a sustain electrode 400 consisting of a transparent electrode 400a and a bus electrode 400b, an upper dielectric layer 600, and a protective layer 800 sequentially stacked on a surface thereof facing the lower substrate 300.

The lower substrate 300 has an address electrode 500 to generate discharge in cooperation with the sustain electrode 400, a lower dielectric layer 700, and partition walls 200 sequentially stacked thereon.

Each of the partition walls 200 comprises an oxide of at least one material selected from the group consisting of silicon (Si), magnesium (Mg), aluminum (Al), calcium (Ca), zinc (Zn), barium (Ba), strontium (Sr), boron (B), phosphorus (P), zirconium (Zr), sodium (Na), lithium (Li), lanthanum (La), potassium (K), manganese (Mn), molybdenum (Mo), iron (Fe), titan (Ti), europium (Eu), antimony (Sb), bismuth (Bi), praseodymium (Pr), and cerium (Ce).

In other words, each of the partition walls 200 may consist of the group of SiO₂Al₂O₃MgO comprising SiO₂, Al₂O₃, MgO, BaO, CaO, ZnO, SrO, ZrO₂, and Eu₂O. Alternatively, each of the partition walls may consist of the group of SiO₂-B₂O₃₋Na₂O comprising SiO₂, Al₂O₃, MgO, B₂O₃, CaO, Fe₂O₃, ZnO, Na₂O, and K₂O.

Alternatively, each of the partition walls may consist of the group of P₂O₅-ZnO-Bi₂O₃ comprising P₂O₅, Al₂O₃, ZnO, Sb₂O₃, Bi₂O₃, SrO, ZrO₂, Eu₂O, and Na₂O. Alternatively, each of the partition walls may consist of the group of B₂O₃₋ZnO-La₂O₃ comprising B₂O₃, ZnO, La₂O₃, MgO, CaO, SrO, ZrO₂, Eu₂O and Na₂O.

Preferably, the group of SiO₂-Al₂O₃-MgO has compositions of 20% ≤ SiO₂ ≤ 45%, 20% ≤ Al₂O₃ ≤ 45%, 5% ≤ MgO ≤ 15%, 5% ≤ BaO ≤ 15%, 2% ≤ CaO ≤ 5%, 0% < ZnO ≤ 10%, 0% < SrO ≤ 5%, 0% < ZrO₂ ≤ 5%, and 0% < Eu₂O ≤ 5%. Preferably, the group of SiO₂-B₂O₃-Na₂O has compositions of 50% ≤ SiO₂ ≤ 75%, 0% < Al₂O₃ ≤ 10%, 0% < MgO ≤ 2%, 2% ≤ B₂O₃ ≤ 15%, 0% < CaO ≤ 3%, 0% < Fe₂O₃ ≤ 5%, 2% ≤ ZnO ≤ 5%, 5% ≤ Na₂O ≤ 15%, and 0% < K₂O ≤ 5%.

In addition, the group of P₂O₅-ZnO-Bi₂O₃ preferably has compositions of 50% ≤ P₂O₅ ≤ 75%, 0% < Al₂O₃ ≤ 20%, 0% < ZnO ≤ 2%, 2% ≤ Sb₂O₃ ≤ 15%, 0% < Bi₂O₃ ≤ 3%, 0% < SrO ≤ 3%, 0% < ZrO₂ ≤ 2%, 0% < Eu₂O ≤ 3%, and 0% < Na₂O ≤ 2%. Preferably, the group of B₂O₃-ZnO-La₂O₃ has compositions of 20% ≤ B₂O₃ ≤ 40%, 10% ≤ ZnO ≤ 35%, 10% ≤ La₂O₃ ≤ 30%, 0% < MgO ≤ 7%, 0% < CaO ≤ 9%, 0% < SrO ≤ 4%, 0% < ZrO₂ ≤ 2%, 0% < Eu₂O ≤ 2%, and 0% < Na₂O ≤ 2%.

In the partition walls 200 of the present invention, heavy metal components must be avoided or minimized in order to minimize refraction and scattering of ultraviolet rays.

Meanwhile, when increasing the content of SiO₂ in the partition walls 200, transmittance of the ultraviolet rays is increased, whereas there arises a significant decrease in thermal expansion coefficient along with an increase in baking temperatures. Thus, it is necessary to control the content of SiO₂ properly according to desired properties.

When the partition walls 200 are formed using the group of P₂O₅-ZnO-Bi₂O₃, the composition must be determined with care since the partition walls 200 are likely to suffer from crystallization due to minute variation of the composition, and cracks due to the high thermal expansion coefficient.

When the partition walls 200 are formed using the group of B₂O₃-ZnO-La₂O₃, it is desirable to use a drying process which can be used for processing powders, since this group is very vulnerable to moisture.

Meanwhile, the partition walls 200 may comprise a mixture of a glass powder matrix and a filler powder.

Preferably, in the mixture of the glass powder matrix and the filler powder, the ratio of the filler powder to the glass powder matrix may be in the range of 5 ~ 45 wt%.

In other words, each of the partition walls may comprise a non-Pb based glass powder matrix, and a non-Pb based filler having a ratio of 5 ~ 45 wt% with respect to the glass powder matrix.

The filler powder serves to increase strength of the partition walls while minimizing ultraviolet scattering.

Preferably, the filler powder has a nano size not greater than wavelength bands of ultraviolet rays in order to enhance ultraviolet transmittance of the partition walls.

As such, since the filler powder has the nano size, the filler powder is present between the glass powders, thereby forming a densely crystallized glass.

As a result, the partition walls 200 have enhanced impact resistance due to the fine fillers, and enhanced transmittance of the ultraviolet rays due to minimization of ultraviolet scattering.

As such, each of the partition walls may comprise the non-Pb based glass powder matrix, and the non-Pb based filler which has a particle size of an ultraviolet wavelength or less.

Each of the partition walls 200 comprises the mixture of the glass powder matrix and the filler powder, and at least one of the glass powder matrix and the filler powder comprises an oxide of at least one material selected from the group consisting of silicon (Si), magnesium (Mg), aluminum (Al), calcium (Ca), zinc (Zn), barium (Ba), strontium (Sr), boron (B), phosphorus (P), zirconium (Zr), sodium (Na), lithium (Li), lanthanum (La), potassium (K), manganese (Mn), molybdenum (Mo), iron (Fe), titan (Ti), europium (Eu), antimony (Sb), bismuth (Bi), praseodymium (Pr), and cerium (Ce).

The at least one of the glass powder matrix and the filler powder may consist of the group of SiO₂-Al₂O₃-MgO comprising SiO₂, Al₂O₃, MgO, BaO, CaO, ZnO, SrO, ZrO₂, and Eu₂O.

Preferably, the group of SiO₂-Al₂O₃-MgO has compositions of 20% ≤ SiO₂ ≤ 45%, 20% ≤ Al₂O₃ ≤ 45%, 5% ≤ MgO ≤ 15%, 5% ≤ BaO ≤ 15%, 2% ≤ CaO ≤ 5%, 0% < ZnO ≤ 10%, 0% < SrO ≤ 5%, 0% < ZrO₂ ≤ 5%, and 0% < Eu₂O ≤ 5%.

The at least one of the glass powder matrix and the filler powder may consist of the group of SiO₂-B₂O₃-Na₂O comprising SiO₂, Al₂O₃, MgO, B₂O₃, CaO, Fe₂O₃, ZnO, Na₂O, and K₂O.

Preferably, the group of SiO₂-B₂O₃-Na₂O has compositions of 50% ≤ SiO₂ ≤ 75%, 0% < Al₂O₃ ≤ 10%, 0% < MgO ≤ 2%, 2% ≤ B₂O₃ ≤ 15%, 0% < CaO ≤ 3%, 0% < Fe₂O₃ ≤ 5%, 2% ≤ ZnO ≤ 5%, 5% ≤ Na₂O ≤ 15%, and 0% < K₂O ≤ 5%.

The at least one of the glass powder matrix and the filler powder may consist of the group of P₂O₅-ZnO-Bi₂O₃ comprising P₂O₅, Al₂O₃, ZnO, Sb₂O₃, Bi₂O₃, SrO, ZrO₂, Eu₂O, and Na₂O.

Preferably, the group of P₂O₅-ZnO-Bi₂O₃ has compositions of 50% ≤ P₂O₅ ≤ 75%, 0% < Al₂O₃ ≤ 20%, 0% < ZnO ≤ 2%, 2% ≤ Sb₂O₃ ≤ 15%, 0% < Bi₂O₃ ≤ 3%, 0% < SrO ≤ 3%, 0% < ZrO₂ ≤ 2%, 0% < Eu₂O ≤ 3%, and 0% < Na₂O ≤ 2%.

Next, the at least one of the glass powder matrix and the filler powder may consist of the group of B₂O₃-ZnO-La₂O₃ comprising B₂O₃, ZnO, La₂O₃, MgO, CaO, SrO, ZrO₂, Eu₂O and Na₂O.

Preferably, the group of B₂O₃-ZnO-La₂O₃ has compositions of 20% ≤ B₂O₃ ≤ 40%, 10% ≤ ZnO ≤ 35%, 10% ≤ La₂O₃ ≤ 30%, 0% < MgO ≤ 7%, 0% < CaO ≤ 9%, 0% < SrO ≤ 4%, 0% < ZrO₂ ≤ 2%, 0% < Eu₂O ≤ 2%, and 0% < Na₂O ≤ 2%.

Phosphors 900 are formed on an upper surface of the lower dielectric layer 700, and sides of each partition wall 200.

A method for manufacturing a plasma display panel according to the present invention will be described hereinafter.

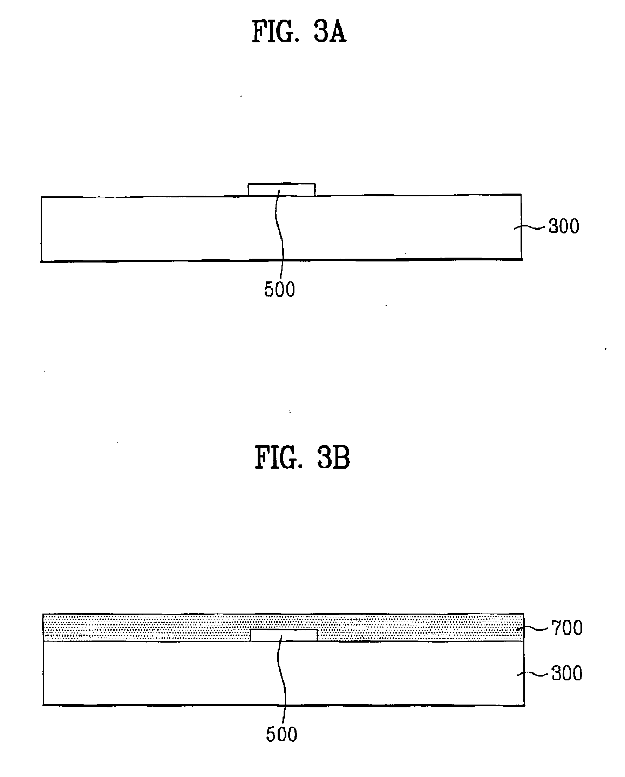

FIGs. 3A to 3F are flow diagrams illustrating steps of the method according to the present invention.

First, as shown in FIG. 3A, an address electrode 500 is formed on a light emitting region of a lower substrate 300.

The address electrode 500 may comprise Ag, metal-coated Ag, and the like. Alternatively, the address electrode 500 may comprise any one of conductive metallic materials or a compound of two or more of them.

Next, as shown in FIG. 3B, a lower dielectric layer 700 is formed on a non-light emitting region and the light emitting region of the lower substrate including the address electrode 500.

The lower dielectric layer 700 may have a thickness of about 20 µm.

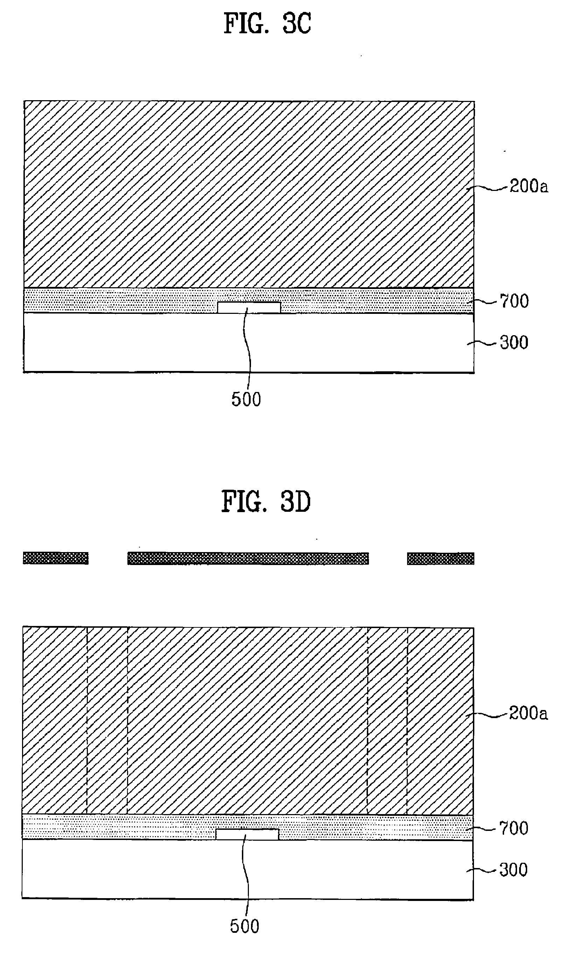

Then, as shown in FIG. 3C, a paste layer 200a for partition walls is formed on the lower dielectric layer 700.

The paste layer 200a for the partition walls is produced by mixing a filler with a glass powder matrix, and then mixing the powder mixture with an organic solvent.

At least one of the glass powder matrix and the filler comprises an oxide of at least one material selected from the group consisting of silicon (Si), magnesium (Mg), aluminum (Al), calcium (Ca), zinc (Zn), barium (Ba), strontium (Sr), boron (B), phosphorus (P), zirconium (Zr), sodium (Na), lithium (Li), lanthanum (La), potassium (K), manganese (Mn), molybdenum (Mo), iron (Fe), titan (Ti), europium (Eu), antimony (Sb), bismuth (Bi), praseodymium (Pr), and cerium (Ce).

The at least one of the glass powder matrix and the filler may consist of the group of SiO₂-Al₂O₃-MgO comprising SiO₂, Al₂O₃, MgO, BaO, CaO, ZnO, SrO, ZrO₂ and Eu₂O, the group of SiO₂-B₂O₃-Na₂O comprising SiO₂, Al₂O₃, MgO, B₂O₃, CaO, Fe₂O₃, ZnO, Na₂O, and K₂O, the group of P₂O₅-ZnO-Bi₂O₃ comprising P₂O₅, Al₂O₃, ZnO, Sb₂O₃, Bi₂O₃, SrO, ZrO₂, Eu₂O, and Na₂O, or the group of B₂O₃-ZnO-La₂O₃ comprising B₂O₃, ZnO, La₂O₃, MgO, CaO, SrO, ZrO₂, Eu₂O and Na₂O.

At this time, the group of SiO₂-Al₂O₃-MgO preferably has compositions of 20% ≤ SiO₂ ≤ 45%, 20% ≤ Al₂O₃ ≤ 45%, 5% ≤ MgO ≤ 15%, 5% ≤ BaO ≤ 15%, 2% ≤ CaO ≤ 5%, 0% < ZnO ≤ 10%, 0% < SrO ≤ 5%, 0% < ZrO₂ ≤ 5%, and 0% < Eu₂O ≤ 5%. The group of SiO₂-B₂O₃-Na₂O preferably has compositions of 50% ≤ SiO₂ ≤ 75%, 0% < Al₂O₃ ≤ 10%, 0% < MgO ≤ 2%, 2% ≤ B₂O₃ ≤ 15%, 0% < CaO ≤ 3%, 0% < Fe₂O₃ ≤ 5%, 2% ≤ ZnO ≤ 5%, 5% ≤ Na₂O ≤ 15%, and 0% < K₂O ≤ 5%. The group of P₂O₅-ZnO-Bi₂O₃ preferably has compositions of 50% ≤ P₂O₅ ≤ 75%, 0% < Al₂O₃ ≤ 20%, 0% < ZnO ≤ 2%, 2% ≤ Sb₂O₃ ≤ 15%, 0% < Bi₂O₃ ≤ 3%, 0% < SrO ≤ 3%, 0% < ZrO₂ ≤ 2%, 0% < Eu₂O ≤ 3%, and 0% < Na₂O ≤ 2%. The group of B₂O₃-ZnO-La₂O₃ preferably has compositions of 20% ≤ B₂O₃ ≤ 40%, 10% ≤ ZnO ≤ 35%, 10% ≤ La₂O₃ ≤ 30%, 0% < MgO ≤ 7%, 0% < CaO ≤ 9%, 0% < SrO ≤ 4%, 0% < ZrO₂ ≤ 2%, 0% < Eu₂O ≤ 2%, and 0% < Na₂O ≤ 2%.

The paste layer 200a preferably has a thickness of about 90 - 120 µm.

Next, as shown in FIG. 3D, the paste layer 200a is exposed to ultraviolet rays through a mask such that predetermined regions thereof are exposed to the ultraviolet rays.

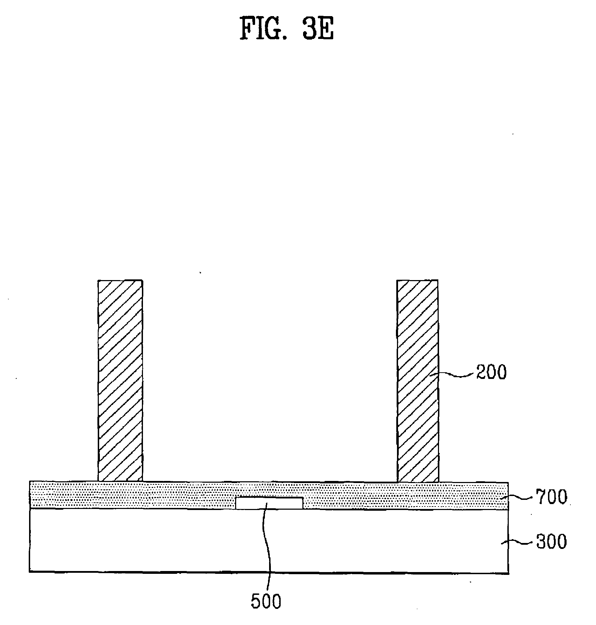

Then, as shown in FIG. 3E, non-exposed portions 200a of the paste layer are removed by development, and remaining portions of the paste layer 200a are baked, thereby forming the partition walls 200.

Here, since the material used for the partition walls 200 has a good ultraviolet transmittance, the partition walls are rigid, and exhibit good adhering properties after exposure and development processes, thereby enhancing properties of the plasma display panel.

The paste layer 200a for the partition walls are preferably baked at a temperature of about 550 ~ 600 degrees.

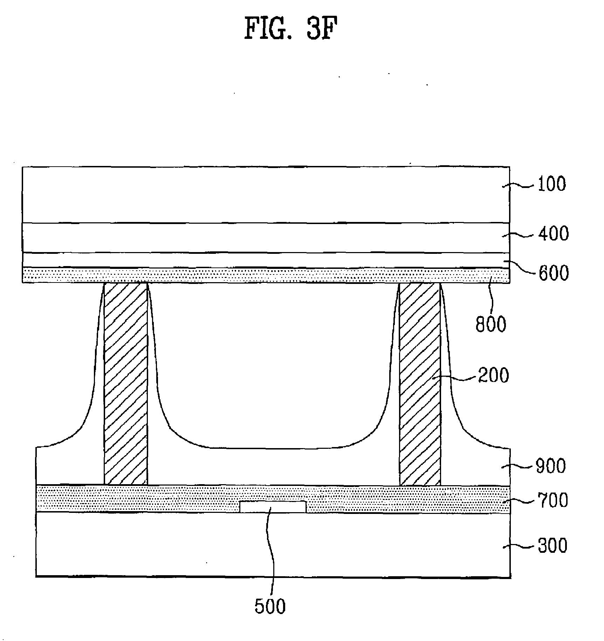

Next, as shown in FIG. 3F, after forming phosphors 900 on the lower dielectric layer 700 and sides of the partition walls 200, an upper substrate 100 having a sustain electrode 400, an upper dielectric layer 600 and a protective layer 800 formed thereon is assembled on the partition walls 200, thereby providing the plasma display panel.

As apparent from the above description, the plasma display panel according to the present invention has advantageous effects as follows.

Since the material used for the partition walls has a good ultraviolet transmittance, the partition walls have excellent strength, and exhibit good adhering properties with respect to the substrate after exposure and development processes, thereby enhancing properties of the plasma display panel.

In addition, since the partition walls are formed of environmentally friendly materials without containing PbO, the plasma display panel provides effect of preventing environmental pollution.

It will be apparent to those skilled in the art that various modifications and variations can be made in the present invention without departing from the spirit or scope of the inventions. Thus, it is intended that the present invention covers the modifications and variations of this invention provided they come within the scope of the appended claims and their equivalents.

## Claims

1. A plasma display panel comprising partition walls between first and second substrates to separate discharge cells from each other,
wherein each of the partition walls comprises a non-Pb based glass powder matrix, and a non-Pb based filler having a ratio of 5 ~ 45 wt% with respect to the glass powder matrix.

2. The plasma display panel according to claim 1, wherein at least one of the glass powder matrix and the filler comprises an oxide of at least one material selected from the group consisting of silicon (Si), magnesium (Mg), aluminum (A1), calcium (Ca), zinc (Zn), barium (Ba), strontium (Sr), boron (B), phosphorus (P), zirconium (Zr), sodium (Na), lithium (Li), lanthanum (La), potassium (K), manganese (Mn), molybdenum (Mo), iron (Fe), titan (Ti), europium (Eu), antimony (Sb), bismuth (Bi), praseodymium (Pr), and cerium (Ce), the at least one of the glass powder matrix and the filler being one material among a SiO₂-Al₂O₃-MgO based material, a SiO₂-B₂O₃-Na₂O based material, a P₂O₅-ZnO-Bi₂O₃ based material and a B₂O₃-ZnO-La₂O₃ based material.

3. The plasma display panel according to claim 2, wherein the SiO₂-Al₂O₃-MgO based material comprises SiO₂, Al₂O₃, MgO, BaO, CaO, ZnO, SrO, ZrO₂, and Eu₂O.

4. The plasma display panel according to claim 3, wherein the SiO₂-Al₂O₃-MgO based material has compositions of 20% ≤ SiO₂ ≤ 45%, 20% ≤ Al₂O₃ ≤ 45%, 5% ≤ MgO ≤ 15%, 5% ≤ BaO ≤ 15%, 2% ≤ CaO ≤ 5%, 0% < ZnO ≤ 10%, 0% < SrO ≤ 5%, 0% < ZrO₂ ≤ 5%, and 0% < Eu₂O ≤ 5%.

5. The plasma display panel according to claim 2, wherein the SiO₂-B₂O₃-Na₂O based material comprises SiO₂, Al₂O₃, MgO, B₂O₃, CaO, Fe₂O₃, ZnO, Na₂O, and K₂O.

6. The plasma display panel according to claim 5, wherein the SiO₂-B₂O₃-Na₂O based material has compositions of 50% ≤ SiO₂ ≤ 75%, 0% < Al₂O₃ ≤ 10%, 0% < MgO ≤ 2%, 2% ≤ B₂0₃ ≤ 15%, 0% < CaO ≤ 3%, 0% < Fe₂O₃ ≤ 5%, 2% ≤ ZnO ≤ 5%, 5% ≤ Na₂O ≤ 15%, and 0% < K₂O ≤ 5%.

7. The plasma display panel according to claim 2, wherein the P₂O₅-ZnO-Bi₂O₃ based material comprises P₂O₅, Al₂O₃, ZnO, Sb₂O₃, Bi₂O₃, SrO, ZrO₂, Eu₂O, and Na₂O.

8. The plasma display panel according to claim 7, wherein the P₂O₅-ZnO-Bi₂O₃ based material has compositions of 50% ≤ P₂O₅ ≤ 75%, 0% < Al₂O₃ ≤ 20%, 0% < ZnO ≤ 2%, 2% ≤ Sb₂O₃ ≤ 15%, 0% < Bi₂O₃ ≤ 3%, 0% < SrO ≤ 3%, 0% < ZrO₂ ≤ 2%, 0% < Eu₂O ≤ 3%, and 0% < Na₂O ≤ 2%.

9. The plasma display panel according to claim 2, wherein the B₂O₃-ZnO-La₂O₃ based material comprises B₂O₃, ZnO, La₂O₃, MgO, CaO, SrO, ZrO₂, Eu₂O and Na₂O.

10. The plasma display panel according to claim 9, wherein the B₂O₃-ZnO-La₂O₃ based material has compositions of 20% ≤ B₂O₃ ≤ 40%, 10% ≤ ZnO ≤ 35%, 10% ≤ La₂O₃ ≤ 30%, 0% < MgO ≤ 7%, 0% < CaO ≤ 9%, 0% < SrO ≤ 4%, 0% < ZrO₂ ≤ 2%, 0% < Eu₂O ≤ 2%, and 0% < Na₂O ≤ 2%.

11. A plasma display panel comprising partition walls between first and second substrates to separate discharge cells from each other,
wherein each of the partition walls comprises a non-Pb based glass powder matrix, and a non-Pb based filler having a particle size of an ultraviolet wavelength or less.
